# EUROPÄISCHE PATENTSCHRIFT

(11) **EP 3 781 452 B1**
(45) Veröffentlichungstag und Bekanntmachung des Hinweises auf die Patenterteilung: **02.03.2022**
(21) Anmeldenummer: 19734287.6
(22) Anmeldetag: 14.06.2019
(51) Int. Cl.: B61L 15/00, G10L 15/26, G10L 15/22

(54) **VERFAHREN UND VORRICHTUNG ZUM STEUERN EINES SCHIENENFAHRZEUGS MITTELS SPRACHMITTEILUNG**
METHOD AND DEVICE FOR CONTROLLING A RAIL VEHICLE BY MEANS OF VOICE MESSAGE
PROCÉDÉ ET DISPOSITIF DE COMMANDE D'UN VÉHICULE FERROVIAIRE PAR MESSAGE VOCAL

(30) Priorität: 21.06.2018 DE 102018210112
(43) Veröffentlichungstag der Anmeldung: 24.02.2021
(73) Patentinhaber: Siemens Mobility GmbH, 81739 München (DE)
(72) Erfinder: LOHNEIS, Georg, 96250 Ebensfeld (DE)
(86) Internationale Anmeldenummer: PCT/EP2019/065651
(87) Internationale Veröffentlichungsnummer: WO 2019/243181

(56) Entgegenhaltungen:
- DE-A1-102013 108 627
- US-A1- 2003 097 210
- US-B1- 6 587 824
- US-B2- 7 236 859

## Beschreibung

Die Erfindung betrifft ein Verfahren und eine Vorrichtung zum Steuern eines Schienenfahrzeugs. Die Erfindung betrifft ferner ein Schienenfahrzeug sowie ein Computerprogramm.

Es ist bekannt, Eingaben von Zahlen an einem Bildschirm in einem Führerstand eines Schienenfahrzeugs händisch über eine simulierte Tastatur über Softkeys bei einem berührungsempfindlichen Bildschirm oder über Tasten am Bildschirm einzugeben. Beispielsweise müssen bei einer Zugdateneingabe viele Werte eingegeben werden, gegebenenfalls mehrmals für jedes Zugsicherungssystem.

Da dies sehr zeitaufwendig ist, besteht ein Bedarf, eine entsprechende Eingabezeit zu verkürzen.

Weiter besteht ein Bedarf, Falscheingaben zu reduzieren.

Die Offenlegungsschrift DE 10 2013 108 627 A1 offenbart ein sprachgesteuertes Kommunikationssystem.

Die Offentlegungsschrift US 7 236 859 B2 offenbart ein Fernsteuerungssysem für eine Lokomotive, das auf der Grundlage von Sprachbefehlen funktioniert.

Die der Erfindung zugrunde liegende Aufgabe ist darin zu sehen, ein Konzept zum effizienten Steuern eines Schienenfahrzeugs bereitzustellen.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem ersten Aspekt wird ein Verfahren zum Steuern eines Schienenfahrzeugs bereitgestellt, umfassend die Schritte, die in Anspruch 1 definiert sind.

Nach einem zweiten Aspekt wird eine Vorrichtung zum Steuern eines Schienenfahrzeugs nach Anspruch 7 bereitgestellt.

Nach einem dritten Aspekt wird ein Schienenfahrzeug bereitgestellt, welches die Vorrichtung nach dem zweiten Aspekt umfasst.

Nach einem vierten Aspekt wird ein Computerprogramm bereitgestellt, welches Programmcode zur Durchführung des Verfahrens nach dem ersten Aspekt umfasst, wenn das Computerprogramm auf der Vorrichtung gemäß dem zweiten Aspekt, ausgeführt wird.

Die Erfindung basiert auf der Erkenntnis, dass die obige Aufgabe dadurch gelöst werden kann, dass der Steuerparameter oder die Steuerparameter zur Steuerung des Schienenfahrzeugs nicht mehr händisch eingegeben wird bzw. werden, sondern vielmehr diktiert wird bzw. werden. Es findet also eine Sprachsteuerung des Schienenfahrzeugs statt. Der oder die Steuerparameter werden also über eine Spracheingabe eingegeben und nicht über eine händische Eingabe.

Dadurch wird z.B. der technische Vorteil bewirkt, dass eine Eingabezeit verkürzt werden kann.

Weiter wird dadurch z.B. der technische Vorteil bewirkt, dass Falscheingaben effizient reduziert werden können.

Somit wird insbesondere der technische Vorteil bewirkt, dass ein Konzept zum effizienten Steuern eines Schienenfahrzeugs bereitgestellt ist.

Wenn der Steuerparameter im Singular steht, soll stets der Plural mitgelesen werden und umgekehrt.

Ein Schienenfahrzeug im Sinne der Beschreibung ist z.B. motorisiert oder unmotorisiert.

Ein Schienenfahrzeug ist z.B. eines der folgenden Schienenfahrzeuge: Lokomotive, Triebzug, Triebfahrzeug, Triebwagen, Waggon, Schienenfahrrad.

Gemäß einer Ausführungsform ist vorgesehen, dass bei einer Erfassung eines Korrekturwunsches des Nutzers bezüglich des angezeigten Steuerparameters der angezeigte Steuerparameter entsprechend dem Korrekturwunsch korrigiert wird, wobei der korrigierte Steuerparameter angezeigt wird, wobei das Schienenfahrzeug erst bei Erfassung eines Freigabegebefehls des Nutzers, dass der korrigierte Steuerparameter zum Steuern des Schienenfahrzeugs verwendet werden darf, basierend auf dem korrigierten Steuerparameter gesteuert wird.

Dadurch wird z.B. der technische Vorteil bewirkt, dass ein falsch eingegebener Steuerparameter effizient korrigiert werden kann.

Nach der Erfindung ist zusätzlich vorgesehen, dass ein erster Speicherbereich und ein zweiter Speicherbereich vorgesehen sind, wobei der erste Speicherbereich und der zweite Speicherbereich logisch und/oder physisch getrennt voneinander sind, wobei vor dem Steuern des Schienenfahrzeugs der entsprechende Steuerparameter in dem ersten Speicherbereich gespeichert wird, wobei der in dem ersten Speicherbereich gespeicherte entsprechende Steuerparameter nach der Erfassung des entsprechenden Freigabebefehls von dem ersten Speicherbereich in den zweiten Speicherbereich kopiert wird, so dass das Schienenfahrzeug basierend auf dem in den zweiten Speicherbereich kopierten entsprechenden Steuerparameter gesteuert wird.

Dadurch wird z.B. der technische Vorteil bewirkt, dass der Steuerparameter vor einer Verwendung des Steuerparameters zwecks Steuerung des Schienenfahrzeugs noch geändert werden kann. Die Steuerung des Schienenfahrzeugs basiert also hier auf dem im zweiten Speicherbereich gespeicherten Steuerparameter und nicht auf dem im ersten Speicherbereich gespeicherten Steuerparameter. In einem Betriebsmodus des Schienenfahrzeugs wird also der im zweiten Speicherbereich gespeicherte Steuerparameter ausgelesen und entsprechend zur Steuerung verwendet. Im Betriebsmodus des Schienenfahrzeugs wird also nicht der im ersten Speicherbereich gespeicherte Steuerparameter zwecks Steuerung des Schienenfahrzeugs ausgelesen. Somit kann also der im ersten Speicherbereich gespeicherte Steuerparameter geändert werden, ohne dass dies Auswirkungen auf den Betriebsmodus bzw. auf die Steuerung des Schienenfahrzeugs hat.

Da der Steuerparameter Auswirkungen auf sicherheitsrelevante Funktionen des Schienenfahrzeugs haben kann, ist vor einer Verwendung des Steuerparameters zur Steuerung des Schienenfahrzeugs gemäß dieser Ausführungsform also eine explizite Bestätigung bzw. Freigabe des Nutzers, zum Beispiel eines Schienenfahrzeugführers, beispielsweise eines Lokführers, vorgesehen. Die Freigabe bzw. die Bestätigung entspricht hier dem Freigabebefehl.

So ist zum Beispiel vorgesehen, dass der im ersten Speicherbereich gespeicherte Steuerparameter dem Nutzer angezeigt wird. Dadurch wird dem Nutzer eine einfache Möglichkeit gegeben, zu prüfen, ob seine Spracheingabe korrekt erfasst wurde. Erst nach Freigabe durch den Nutzer wird der im ersten Speicherbereich gespeicherte Steuerparameter in den zweiten Speicherbereich kopiert und steht somit erst dann für die Steuerung des Schienenfahrzeugs zur Verfügung.

Zum Beispiel wird der Steuerparameter nach der Spracheingabe noch einmal an einem Bildschirm (auf Englisch: Display) angezeigt. Der Lokführer bestätigt die Korrektheit und gibt sie für den Betrieb frei. Danach werden sie, zum Beispiel in der Steuerungseinrichtung vom ersten Speicherbereich (Eingabespeicher) in den zweiten Speicherbereich (der Ablaufsteuerung) umkopiert.

Somit können die eingegebenen Steuerparameter (, die allgemein auch als Zugdaten bezeichnet werden können,) vor der Übergabe in den Betriebsmodus noch geändert werden . Desweitern wird sichergestellt dass die übergebenen Zugdaten vor der Übergabe in den Betriebsmodus noch einer Prüfung auf Korrektheit unterzogen werden.

In einer anderen Ausführungsform ist vorgesehen, dass das Anzeigen des entsprechenden Steuerparameters ein Anzeigen des in dem ersten Speicherbereich gespeicherten Steuerparameters umfasst.

Dadurch wird z.B. der technische Vorteil bewirkt, dass überprüft werden kann, dass der Steuerparameter unverfälscht im ersten Speicherbereich gespeichert wurde.

Die Formulierung "der entsprechende Freigabebefehl" umfasst also folgende Begriffe: der "Freigabebefehl, dass der extrahierte Steuerparameter zum Steuern des Schienenfahrzeugs verwendet werden darf", und der "Freigabebefehl des Nutzers, dass der korrigierte Steuerparameter zum Steuern des Schienenfahrzeugs verwendet werden darf".

Die Formulierung "der entsprechende Steuerparameter" umfasst also folgende Begriffe: der "aus der aufgezeichneten Sprachmitteilung extrahierte Steuerparameter" und der "korrigierte Steuerparameter".

In einer Ausführungsform ist vorgesehen, dass das Erfassen des Korrekturwunsches des Nutzers ein Aufzeichnen einer einen korrigierten Steuerparameter zur Steuerung des Schienenfahrzeugs umfassenden weiteren Sprachmitteilung des Nutzers umfasst.

Die Schritte des Extrahierens des korrigierten Steuerparameters und des Anzeigens des korrigierten Steuerparameters sind also insbesondere analog zu den Schritten des Extrahierens des Steuerparameters und des Anzeigen des extrahierten Steuerparameters. Entsprechende Ausführungen gelten analog.

In einer Ausführungsform ist vorgesehen, dass das Extrahieren des Steuerparameters ein Durchführen einer Spracherkennung umfasst, wobei bei einem nicht-Erkennen eines Steuerparameters ein Hinweis an den Nutzer ausgegeben wird, dass kein Steuerparameter erkannt werden konnte.

Dadurch wird z.B. der technische Vorteil bewirkt, dass der Nutzer effizient in Kenntnis darüber gesetzt wird, dass der Steuerparameter nicht extrahiert werden konnte. Der Nutzer kann somit ein weiteres Mal den Steuerparameter mittels einer Spracheingabe eingeben.

In einer anderen Ausführungsform ist vorgesehen, dass der Steuerparameter ein Schlüsselwort und einen dem Schlüsselwort zugeordneten Wert umfasst, wobei geprüft wird, ob das Schlüsselwort einem vorbestimmten Schlüsselwort entspricht, wobei, wenn das Schlüsselwort nicht dem vorbestimmten Schlüsselwort entspricht, ein Hinweis an den Nutzer ausgegeben wird, dass das vorbestimmte Schlüsselwort in der aufgezeichneten Sprachmitteilung fehlt.

Dadurch wird z.B. der technische Vorteil bewirkt, dass effizient sichergestellt werden kann, dass bestimmte Steuerparameter auch eingegeben wie zum Beispiel: Zuglänge, Höchstgeschwindigkeit, Bremshundertstel, Bremsart, Achslast.

Ein Steuerparameter ist also zum Beispiel einer der folgenden Steuerparameter: Zuglänge, Höchstgeschwindigkeit, Bremshundertstel, Bremsart, Achslast.

In einer Ausführungsform ist vorgesehen, dass das Aufzeichnen der Sprachmitteilung erst ansprechend auf eine Erfassung eines Aufzeichnenstartbefehls des Nutzers gestartet wird und/oder wobei das Aufzeichnen der Sprachmitteilung erst ansprechend auf eine Erfassung eines Aufzeichnenstoppbefehls des Nutzers beendet wird.

Dadurch wird z.B. der technische Vorteil bewirkt, dass das Starten respektive das Beenden der Aufzeichnung der Sprachmitteilung effizient durchgeführt werden können.

Insbesondere wird dadurch der technische Vorteil bewirkt, dass die Sprachmitteilung erst dann gestartet respektive dass die Sprachmitteilung erst dann gestoppt wird, wenn der Nutzer einen entsprechenden Befehl gibt.

Ein solcher Aufzeichnenstartbefehl respektive ein solcher Aufzeichnenstoppbefehl umfasst z.B. einen akustischen Aufzeichnenstartbefehl respektive einen akustischen Aufzeichnenstoppbefehl.

Das heißt also insbesondere, dass der Nutzer über eine Sprachsteuerung das Aufzeichnen starten respektive beenden kann.

In einer anderen Ausführungsform ist vorgesehen, dass das Starten der Aufzeichnung respektive das Beenden der Aufzeichnung ansprechend auf eine Erfassung einer Eingabe an einem berührungsempfindlichen Bildschirm durchgeführt wird.

Gemäß einer Ausführungsform ist vorgesehen, dass die Vorrichtung zum Steuern eines Schienenfahrzeugs eingerichtet oder ausgebildet ist, das Verfahren zum Steuern eines Schienenfahrzeugs aus- oder durchzuführen.

Nach einer Ausführungsform ist vorgesehen, dass das Verfahren zum Steuern eines Schienenfahrzeugs mittels der Vorrichtung zum Steuern eines Schienenfahrzeugs aus- oder durchgeführt wird.

Technische Funktionalitäten hinsichtlich der Vorrichtung ergeben sich analog aus entsprechenden technischen Funktionalitäten hinsichtlich des Verfahrens.

Das heißt also insbesondere, dass sich Vorrichtungsmerkmale aus entsprechenden Verfahrensmerkmalen und umgekehrt ergeben.

Nach einer Ausführungsform ist vorgesehen, dass das Schienenfahrzeug ausgebildet oder eingerichtet ist, das Verfahren zum Steuern eines Schienenfahrzeugs aus- oder durchzuführen.

Gemäß einer Ausführungsform ist vorgesehen, dass die Vorrichtung einen Audiorecorder umfasst, welcher die akustische Aufzeichnungseinrichtung umfasst.

In einer Ausführungsform umfasst der Audiorecorder den Prozessor.

Nach einer Ausführungsform ist die Vorrichtung ein mobiles Endgerät, beispielsweise ein Mobiltelefon.

In einer Ausführungsform umfasst die akustische Aufzeichnungseinrichtung ein oder mehrere Mikrofone.

In einer Ausführungsform ist vorgesehen, dass die Erfassungseinrichtung ausgebildet ist, einen Korrekturwunsch des Nutzers bezüglich des angezeigten Steuerparameters zu erfassen.

In einer Ausführungsform ist vorgesehen, dass der Prozessor ausgebildet ist, bei einer Erfassung eines Korrekturwunsches des Nutzers bezüglich des angezeigten Steuerparameters den angezeigten Steuerparameter entsprechend dem Korrekturwunsch zu korrigieren.

In einer Ausführungsform ist vorgesehen, dass die Anzeigeeinrichtung ausgebildet ist, den korrigierten Steuerparameter anzuzeigen.

Gemäß einer Ausführungsform ist vorgesehen, dass die Erfassungseinrichtung ausgebildet ist, einen Freigabebefehl des Nutzers zu erfassen, dass der korrigierte Steuerparameter zum Steuern des Schienenfahrzeugs verwendet werden darf.

In einer Ausführungsform ist vorgesehen, dass die Steuerungseinrichtung ausgebildet ist, das Schienenfahrzeug erst bei Erfassung eines Freigabebefehls des Nutzers zu steuern, dass der korrigierte Steuerparameter zum Steuern des Schienenfahrzeugs verwendet werden darf, basierend auf dem korrigierten Steuerparameter.

Gemäß der Erfindung sind ein erster Speicherbereich und ein zweiter Speicherbereich vorgesehen.

Gemäß der Erfindung sind der erste Speicherbereich und der zweite Speicherbereich logisch und/oder physisch getrennt voneinander.

Gemäß der Erfindung ist vorgesehen, dass der Prozessor ausgebildet ist, vor dem Steuern des Schienenfahrzeugs den entsprechenden Steuerparameter in dem ersten Speicherbereich zu speichern.

Gemäß der Erfindung ist vorgesehen, dass der Prozessor respektive die Steuerungseinrichtung ausgebildet ist, den in dem ersten Speicherbereich gespeicherten entsprechenden Steuerparameter nach der Erfassung des entsprechenden Freigabebefehls von dem ersten Speicherbereich in den zweiten Speicherbereich zu kopieren.

Gemäß der Erfindung ist die Steuerungseinrichtung ausgebildet, das Schienenfahrzeug basierend auf dem in den zweiten Speicherbereich kopierten entsprechenden Steuerparameter zu steuern.

Gemäß einer Ausführungsform ist vorgesehen, dass die Anzeigeeinrichtung ausgebildet ist, den in dem ersten Speicherbereich gespeicherten Steuerparameter anzuzeigen.

Gemäß einer Ausführungsform ist vorgesehen, dass der Prozessor ausgebildet ist, eine Spracherkennung durchzuführen.

In einer Ausführungsform ist vorgesehen, dass die Anzeigeeinrichtung ausgebildet ist, bei einem Nicht-Erkennen eines Steuerparameters einen Hinweis dem Nutzer anzuzeigen, dass kein Steuerparameter erkannt werden konnte.

In einer Ausführungsform ist vorgesehen, dass ein Lautsprecher vorgesehen ist, über welchen bei einem Nicht-Erkennen eines Steuerparameters ein akustischer Hinweis an den Nutzer ausgegeben wird, dass kein Steuerparameter erkannt werden konnte. Der Prozessor ist beispielsweise ausgebildet, den Lautsprecher entsprechend anzusteuern.

Gemäß einer Ausführungsform ist vorgesehen, dass der Steuerparameter ein Schlüsselwort und einen dem Schlüsselwort zugeordneten Wert umfasst, wobei der Prozessor ausgebildet ist, zu prüfen, ob das Schlüsselwort einem vorbestimmten Schlüsselwort entspricht.

In einer Ausführungsform ist vorgesehen, dass die Anzeigeeinrichtung respektive der Lautsprecher ausgebildet sind, einen Hinweis an den Nutzer auszugeben, dass das vorbestimmte Schlüsselwort in der aufgezeichneten Sprachmitteilung fehlt, wenn das Schlüsselwort nicht dem vorbestimmten Schlüsselwort entspricht.

In einer Ausführungsform ist vorgesehen, dass die Aufzeichnungseinrichtung ausgebildet ist, die Sprachmitteilung erst ansprechend auf eine Erfassung eines Aufzeichnenstartbefehls des Nutzers zu starten.

In einer Ausführungsform ist vorgesehen, dass die Aufzeichnungseinrichtung ausgebildet ist, das Aufzeichnen der Sprachmitteilung erst ansprechend auf eine Erfassung eines Aufzeichnenstoppbefehls des Nutzers zu beenden.

In einer Ausführungsform ist vorgesehen, dass die Erfassungseinrichtung ausgebildet ist, einen entsprechenden Aufzeichnenstartbefehl respektive einen entsprechenden Aufzeichnenstoppbefehl des Nutzers zu erfassen.

In einer Ausführungsform umfasst die Erfassungseinrichtung einen berührungsempfindlichen Bildschirm, der gemäß einer weiteren Ausführungsform von der Anzeigeeinrichtung umfasst ist.

In einer Ausführungsform umfasst die Erfassungseinrichtung eine oder mehrere Tasten, die beispielsweise in einem Gehäuserahmen eines Bildschirms, beispielsweise des berührungsempfindlichen Bildschirms, angeordnet sind. Der Bildschirm ist also insbesondere über solche Tasten bedienbar.

Die Formulierung "respektive" umfasst insbesondere die Formulierung "und/oder".

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei
- FIG 1: ein Ablaufdiagramm eines Verfahrens zum Steuern eines Schienenfahrzeugs,
- FIG 2: eine Vorrichtung zum Steuern eines Schienenfahrzeugs,
- FIG 3: ein Schienenfahrzeug und
- FIG 4: ein Blockdiagramm einer Funktionsweise einer Vorrichtung zum Steuern eines Schienenfahrzeugs
zeigen.

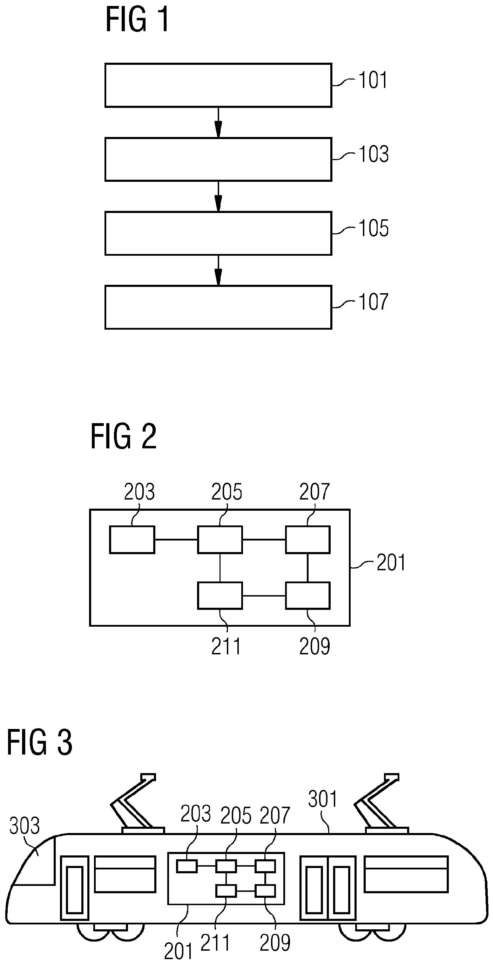

FIG 1 zeigt ein Ablaufdiagramm eines Verfahrens zum Steuern eines Schienenfahrzeugs.

Das Verfahren umfasst die folgenden Schritte:
Aufzeichnen 101 einer einen Steuerparameter zur Steuerung des Schienenfahrzeugs umfassenden Sprachmitteilung eines Nutzers des Schienenfahrzeugs,
Extrahieren 103 des Steuerparameters aus der aufgezeichneten Sprachmitteilung,
Anzeigen 105 des extrahierten Steuerparameters,
Steuern 107 des Schienenfahrzeugs basierend auf dem extrahierten Steuerparameter erst bei Erfassung eines Freigabebefehls des Nutzers, dass der extrahierte Steuerparameter zum Steuern des Schienenfahrzeugs verwendet werden darf.

FIG 2 zeigt eine Vorrichtung 201 zum Steuern eines Schienenfahrzeugs, umfassend:
eine akustische Aufzeichnungseinrichtung 203 zum Aufzeichnen einer einen Steuerparameter zur Steuerung des Schienenfahrzeugs umfassenden Sprachmitteilung eines Nutzers des Schienenfahrzeugs,
einen Prozessor 205 zum Extrahieren des Steuerparameters aus der aufgezeichneten Sprachmitteilung,
eine Anzeigeeinrichtung 207 zum Anzeigen des extrahierten Steuerparameters und
eine Erfassungseinrichtung 209 zum Erfassen eines Freigabebefehls des Nutzers, dass der extrahierte Steuerparameter zum Steuern des Schienenfahrzeugs verwendet werden darf, und eine Steuerungseinrichtung 211 zum Steuern des Schienenfahrzeugs basierend auf dem extrahierten Steuerparameter erst bei Erfassung des Freigabebefehls des Nutzers, dass der extrahierte Steuerparameter zum Steuern des Schienenfahrzeugs verwendet werden darf.

FIG 3 zeigt ein Schienenfahrzeug 301.

Das Schienenfahrzeug 301 umfasst einen Führerstand 303.

Das Schienenfahrzeug 301 umfasst die Vorrichtung 201 gemäß FIG 2.

In einer Ausführungsform ist vorgesehen, dass ein, mehrere oder alle Elemente der Vorrichtung 201 innerhalb des Führerstands 303 angeordnet sind.

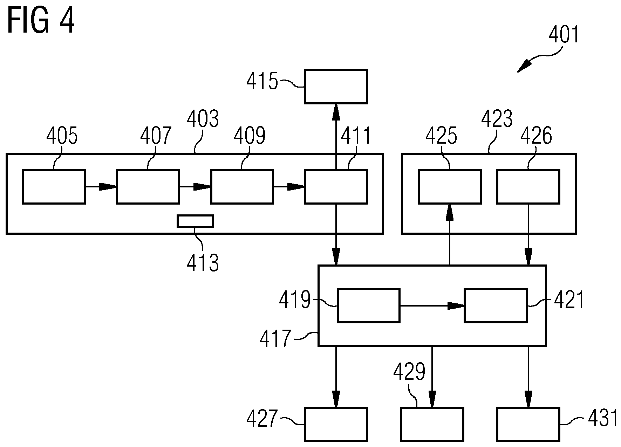

FIG 4 zeigt ein Blockdiagramm einer Funktionsweise einer Vorrichtung 401 zum Steuern eines Schienenfahrzeugs.

Die Vorrichtung 401 umfasst eine akustische Aufzeichnungseinrichtung 403. Die Aufzeichnungseinrichtung 403 umfasst ein Mikrofon 405 zum Aufzeichnen einer einen Steuerparameter zum Steuern des Schienenfahrzeugs umfassenden Sprachmitteilung eines Nutzers des Schienenfahrzeugs.

Das Aufzeichnen der Sprachmitteilung wird gemäß einer anderen Ausführungsform über ein akustisches Kommando oder über eine Eingabe an einem berührungsempfindlichen Bildschirm gestartet.

Gemäß einem Schritt 407 wird eine Spracherkennung der aufgezeichneten Sprachmitteilung durchgeführt.

Entsprechend der Spracherkennung werden erkannte Steuerparameter und/oder Befehle in maschinenlesbare Befehlen respektive maschinenlesbare Steuerparameter umgewandelt gemäß einem Schritt 409.

In einem Schritt 411 findet eine Prüfung der umgewandelten Befehle bzw. Steuerparameter statt.

Das Durchführen der Spracherkennung, das Umwandeln sowie die Prüfung wird mittels eines Prozessors 413 durchgeführt.

Im Rahmen der Prüfung gemäß dem Schritt 411 wird z.B. geprüft, ob ein Zuggewicht des Schienenfahrzeugs in einer Checkliste vorhanden ist. Sofern dies der Fall ist, wird eine Kennung für das Zuggewicht und das Zuggewicht selbst an eine Steuerungseinrichtung 417 übermittelt und in einem ersten Speicherbereich 419 gespeichert.

Der erste Speicherbereich 419 kann allgemein auch als ein temporärer Speicherbereich bezeichnet werden.

Wird beispielsweise ein Schlüsselwort aus der Checkliste bzw. ein eingegebener Steuerparameter bzw. ein einem Schlüsselwort zugeordneten Wert nicht richtig erkannt, erfolgt gemäß einer Ausführungsform eine Ausgabe eines Hinweises über einen Lautsprecher 415, der von der Vorrichtung 415 umfasst ist.

Der nicht richtig erkannte Wert bzw. Steuerparameter bzw. Schlüsselwort kann dann anschließend noch einmal über eine weitere Spracheingabe eingegeben werden.

Wurden alle notwendigen Steuerparameter über eine Spracheingabe eingegeben, wird gemäß einer Ausführungsform das Aufzeichnen der Sprachmitteilung ansprechend auf eine Erfassung eines Aufzeichnenstoppbefehls des Nutzers beendet.

Sowohl das Erfassen des Aufzeichnenstartbefehls als auch das Erfassen eines Aufzeichnenstoppbefehls werden gemäß einer Ausführungsform mittels des Mikrofons 405 durchgeführt.

Die in dem ersten Speicherbereich 419 gespeicherten Elemente werden an eine Anzeigeeinrichtung 423 übermittelt, die gemäß einem Schritt 425 die übermittelten Werte anzeigt.

Die Anzeigeeinrichtung 423 ist beispielsweise ein berührungsempfindlicher Bildschirm.

Das Übermitteln der Werte des ersten Speicherbereichs 419 an die Anzeigeeinrichtung 423 wird basierend auf einem sicheren Verfahren durchgeführt.

Dadurch wird z.B. der technische Vorteil bewirkt, dass effizient sichergestellt werden kann, dass während der Übermittlung keine Verfälschung der Daten stattfindet.

Ein sicheres Verfahren bezeichnet ein Verfahren, bei dem Informationen, hier den oder die Steuerparameter, auf 2 unterschiedlichen Kanälen übertragen werden. Der Nutzer muss dann nach Prüfung auf Richtigkeit bzw. Korrektheit der angezeigten Werte diese quittieren. Erst danach werden die Informationen zur weiteren Verarbeitung, hier Steuerung, freigegeben. Sofern Werte falsch eingegeben wurden, kann an der Anzeigeeinrichtung 423 noch eine manuelle Korrektur der Werte durchgeführt werden.

Dies ist gemäß einem Schritt 426 vorgesehen.

Diese Werte werden zurück zur Steuerungseinrichtung 417 übermittelt und dort in dem ersten Speicherbereich 419 gespeichert.

Anschließend werden sie nochmals zur Anzeigeeinrichtung 423 gesendet, um dort wieder angezeigt zu werden, damit ein Nutzer des Schienenfahrzeugs diese quittieren kann.

Die Quittierung wird zur Steuerungseinrichtung 417 gesendet, wobei ansprechend auf einen Empfang der Quittierung durch die Steuerungseinrichtung 417 die Daten im ersten Speicherbereich 419 in einen zweiten Speicherbereich 421 der Steuerungseinrichtung 417 kopiert werden.

Die Quittierung entspricht oder umfasst beispielsweise einem bzw. einen Tastendruck eines Nutzers des Schienenfahrzeugs, beispielsweise eines Triebfahrzeugführers.

Die Quittierung wird beispielsweise in einem sicheren Verfahren, z.B. eine antivalente Übertragung, zur Steuerungseinrichtung 417 gesendet. Bei der antivalenten Übertragung wird zum Beispiel der Binärwert "1" als "1" und auf einen zweiten Kanal als "0" (negiert) übertragen. Auf der Empfangsseite werden dann beide Werte verglichen. Damit wird sichergestellt dass keine Daten während der Übertragung verfälscht werden. Eine antivalente Übertragung ist also ein Beispiel für ein sicheres Verfahren.

Dadurch stehen diese Daten für nachgeordnete Zugsicherungssysteme 427, 429, 431 während eines Betriebs des Schienenfahrzeugs zur Verfügung.

Insofern kann der zweite Speicherbereich auch allgemein als ein Betriebsspeicher bezeichnet werden.

Die Übermittlung der Daten des zweiten Speicherbereichs 421 an die nachgelagerten Zugsicherungssysteme 427, 429, 431 erfolgt beispielsweise je nach Anforderungen für die einzelnen zu übertragenden Werte in einem gesicherten Verfahren zur Übertragung.

Die vor- und nachstehenden Daten umfassen also insbesondere den oder die Steuerparameter.

Das erfindungsgemäße Konzept weist insbesondere den technischen Vorteil einer schnelleren Eingabe von Steuerparametern, z.B. bei einer Zugdateneingabe, auf. Dies bewirkt z.B. eine Zeitersparnis bei einem Aufrüsten eines Schienenfahrzeugs. Weiter verbessert das erfindungsgemäße Konzept eine Ergonomie bei einer Eingabe der Daten.

Weiter bewirkt das erfindungsgemäße Konzept eine höhere Verfügbarkeit der Schienenfahrzeuge.

Daten lassen sich somit schneller in eine Steuerungseinrichtung eines Schienenfahrzeugs eingeben.

Weiter vereinfacht dies eine Architektur bei mehreren Zugsicherungssystemen in einem Schienenfahrzeug.

Das erfindungsgemäße Konzept kann auch für eine andere Eingabe am Bildschirm verwendet werden, die bisher über eine Auswahl von Tasten oder Softkeys am Bildschirm erfolgte.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Steuern eines Schienenfahrzeugs (301), umfassend die folgenden Schritte:
Aufzeichnen (101) einer einen Steuerparameter zur Steuerung des Schienenfahrzeugs (301) umfassenden Sprachmitteilung eines Nutzers des Schienenfahrzeugs (301),
Extrahieren (103) des Steuerparameters aus der aufgezeichneten Sprachmitteilung,
Anzeigen (105) des extrahierten Steuerparameters,
Steuern (107) des Schienenfahrzeugs (301) basierend auf dem extrahierten Steuerparameter erst bei Erfassung eines Freigabebefehls des Nutzers, dass der extrahierte Steuerparameter zum Steuern des Schienenfahrzeugs (301) verwendet werden darf,
**dadurch gekennzeichnet,**
**dass** ein erster Speicherbereich und ein zweiter Speicherbereich vorgesehen sind,
**dass** der erste Speicherbereich und der zweite Speicherbereich logisch und/oder physisch getrennt voneinander sind,
**dass** vor dem Steuern des Schienenfahrzeugs (301) der entsprechende Steuerparameter in dem ersten Speicherbereich gespeichert wird,
**dass** der in dem ersten Speicherbereich gespeicherte entsprechende Steuerparameter nach der Erfassung des entsprechenden Freigabebefehls von dem ersten Speicherbereich in den zweiten Speicherbereich kopiert wird, so dass das Schienenfahrzeug (301) basierend auf dem in den zweiten Speicherbereich kopierten entsprechenden Steuerparameter gesteuert wird.

2. Verfahren nach Anspruch 1, **dadurch gekennzeichnet,**
**dass** bei einer Erfassung eines Korrekturwunsches des Nutzers bezüglich des angezeigten Steuerparameters der angezeigte Steuerparameter entsprechend dem Korrekturwunsch korrigiert wird,
**dass** der korrigierte Steuerparameter angezeigt wird,
**dass** das Schienenfahrzeug (301) erst bei Erfassung eines Freigabegebefehls des Nutzers, dass der korrigierte Steuerparameter zum Steuern des Schienenfahrzeugs (301) verwendet werden darf, basierend auf dem korrigierten Steuerparameter gesteuert wird.

3. Verfahren nach Anspruch 1, **dadurch gekennzeichnet, dass** das Anzeigen des entsprechenden Steuerparameters ein Anzeigen des in dem ersten Speicherbereich gespeicherten Steuerparameters umfasst.

4. Verfahren nach einem der vorherigen Ansprüche, **dadurch gekennzeichnet, dass** das Extrahieren des Steuerparameters ein Durchführen einer Spracherkennung umfasst, wobei bei einem nicht-Erkennen eines Steuerparameters ein Hinweis an den Nutzer ausgegeben wird, dass kein Steuerparameter erkannt werden konnte.

5. Verfahren nach einem der vorherigen Ansprüche, **dadurch gekennzeichnet,**
**dass** der Steuerparameter ein Schlüsselwort und einen dem Schlüsselwort zugeordneten Wert umfasst,
**dass** geprüft wird, ob das Schlüsselwort einem vorbestimmten Schlüsselwort entspricht,
**dass**, wenn das Schlüsselwort nicht dem vorbestimmten Schlüsselwort entspricht, ein Hinweis an den Nutzer ausgegeben wird, dass das vorbestimmte Schlüsselwort in der aufgezeichneten Sprachmitteilung fehlt.

6. Verfahren nach einem der vorherigen Ansprüche, **dadurch gekennzeichnet, dass** das Aufzeichnen der Sprachmitteilung erst ansprechend auf eine Erfassung eines Aufzeichnenstartbefehls des Nutzers gestartet wird und/oder dass das Aufzeichnen der Sprachmitteilung erst ansprechend auf eine Erfassung eines Aufzeichnenstoppbefehls des Nutzers beendet wird.

7. Vorrichtung (201) zum Steuern eines Schienenfahrzeugs (301), umfassend:
eine akustische Aufzeichnungseinrichtung (203) zum Aufzeichnen einer einen Steuerparameter zur Steuerung des Schienenfahrzeugs (301) umfassenden Sprachmitteilung eines Nutzers des Schienenfahrzeugs (301),
einen Prozessor (205) zum Extrahieren des Steuerparameters aus der aufgezeichneten Sprachmitteilung,
eine Anzeigeeinrichtung (207) zum Anzeigen des extrahierten Steuerparameters und
eine Erfassungseinrichtung (209) zum Erfassen eines Freigabebefehls des Nutzers, dass der extrahierte Steuerparameter zum Steuern des Schienenfahrzeugs (301) verwendet werden darf, und
eine Steuerungseinrichtung (211) zum Steuern des Schienenfahrzeugs (301) basierend auf dem extrahierten Steuerparameter erst bei Erfassung des Freigabebefehls des Nutzers, dass der extrahierte Steuerparameter zum Steuern des Schienenfahrzeugs (301) verwendet werden darf,
**dadurch gekennzeichnet,**
**dass** ein erster Speicherbereich und ein zweiter Speicherbereich vorgesehen sind,
**dass** der erste Speicherbereich und der zweite Speicherbereich logisch und/oder physisch getrennt voneinander sind, wobei Z der Prozessor ausgebildet ist,
vor dem Steuern des Schienenfahrzeugs (301) der entsprechende Steuerparameter in dem ersten Speicherbereich zu speichern,
wobei der Prozessor ausgebildet ist, der in dem ersten Speicherbereich gespeicherte entsprechende Steuerparameter nach der Erfassung des entsprechenden Freigabebefehls von dem ersten Speicherbereich in den zweiten Speicherbereich zu kopieren, und die Steuerungseinrichtung ausgebildet ist, das Schienenfahrzeug (301) basierend auf dem in den zweiten Speicherbereich kopierten entsprechenden Steuerparameter zu steuern.

8. Schienenfahrzeug (301), umfassend die Vorrichtung (201) nach Anspruch 7.

9. Computerprogramm, umfassend Programmcode zur Durchführung des Verfahrens nach einem der Ansprüche 1 bis 6, wenn das Computerprogramm auf der Vorrichtung gemäß Anspruch 7 ausgeführt wird.

## Claims

1. Method for controlling a rail vehicle (301), comprising the following steps:
recording (101) a voice message of a user of the rail vehicle (301), comprising a control parameter for controlling the rail vehicle (301),
extracting (103) the control parameter from the recorded voice message,
displaying (105) the extracted control parameter,
controlling (107) the rail vehicle (301) on the basis of the extracted control parameter only upon detection of a release command from the user permitting the extracted control parameter to be used for controlling the rail vehicle (301), **characterized**
**in that** a first memory area and a second memory area are provided,
**in that** the first memory area and the second memory area are logically and/or physically separate from each other,
**in that** the applicable control parameter is stored in the first memory area before the rail vehicle (301) is controlled,
**in that** the applicable control parameter stored in the first memory area is copied from the first memory area to the second memory area after the applicable release command has been detected, so that the rail vehicle (301) is controlled on the basis of the applicable control parameter copied to the second memory area.

2. Method according to Claim 1, **characterized**
**in that**, upon detection of a correction request from the user in relation to the displayed control parameter, the displayed control parameter is corrected according to the correction request,
**in that** the corrected control parameter is displayed,
**in that** the rail vehicle (301) is controlled on the basis of the corrected control parameter only upon detection of a release command from the user permitting the corrected control parameter to be used for controlling the rail vehicle (301).

3. Method according to Claim 1, **characterized in that** the display of the applicable control parameter comprises displaying the control parameter stored in the first memory area.

4. Method according to one of the preceding claims, **characterized in that** the extraction of the control parameter comprises performing a voice recognition, wherein, if a control parameter is not recognized, then an indication that no control parameter could be recognized is output to the user.

5. Method according to one of the preceding claims, **characterized**
**in that** the control parameter comprises a keyword and a value assigned to the keyword,
**in that** a check is performed to determine whether the keyword corresponds to a predetermined keyword,
**in that**, if the keyword does not correspond to the predetermined keyword, then an indication that the predetermined keyword is missing from the recorded voice message is output to the user.

6. Method according to one of the preceding claims, **characterized in that** the recording of the voice message is started only in response to a detection of a recording start command from the user and/or **in that** the recording of the voice message is ended only in response to a detection of a recording stop command from the user.

7. Apparatus (201) for controlling a rail vehicle (301), comprising:
an acoustic recording device (203) for recording a voice message of a user of the rail vehicle (301), comprising a control parameter for controlling the rail vehicle (301),
a processor (205) for extracting the control parameter from the recorded voice message,
a display device (207) for displaying the extracted control parameter and
a detection device (209) for detecting a release command from the user permitting the extracted control parameter to be used for controlling the rail vehicle (301), and
a control device (211) for controlling the rail vehicle (301) on the basis of the extracted control parameter only upon detection of the release command from the user permitting the extracted control parameter to be used for controlling the rail vehicle (301),
**characterized**
**in that** a first memory area and a second memory area are provided,
**in that** the first memory area and the second memory area are logically and/or physically separate from each other,
wherein the processor is designed to store the applicable control parameter in the first memory area before the rail vehicle (301) is controlled, wherein the processor is designed to copy the applicable control parameter stored in the first memory area from the first memory area to the second memory area after the applicable release command has been detected, and the control device is designed to control the rail vehicle (301) on the basis of the applicable control parameter copied to the second memory area.

8. Rail vehicle (301), comprising the apparatus (201) according to Claim 7.

9. Computer program, comprising program code for carrying out the method according to one of Claims 1 to 6 when the computer program is executed on the apparatus according to Claim 7.

## Revendications

1. Procédé de commande d'un véhicule ferroviaire (301), comprenant les étapes suivantes :
enregistrement (101) d'un message vocal d'un utilisateur du véhicule ferroviaire (301) comprenant un paramètre de commande pour commander le véhicule ferroviaire (301), extraction (103) du paramètre de commande du message vocal enregistré, affichage (105) du paramètre de commande extrait, commande (107) du véhicule ferroviaire (301) sur la base du paramètre de commande extrait uniquement lors de la détection d'un ordre de validation de l'utilisateur selon lequel le paramètre de commande extrait peut être utilisé pour commander le véhicule ferroviaire (301), **caractérisé en ce qu'**une première zone de mémoire et une deuxième zone de mémoire sont prévues, **en ce que** la première zone de mémoire et la deuxième zone de mémoire sont séparées l'une de l'autre logiquement et / ou physiquement, **en ce qu'**avant la commande du véhicule ferroviaire (301), le paramètre de commande correspondant est enregistré dans la première zone de mémoire, **en ce que** le paramètre de commande correspondant enregistré dans la première zone de mémoire, après la détection de l'ordre de validation correspondant, est copié de la première zone de mémoire à la deuxième zone de mémoire, de sorte que le véhicule ferroviaire (301) est commandé sur la base du paramètre de commande correspondant copié dans la deuxième zone de mémoire.

2. Procédé selon la revendication 1, **caractérisé en ce que** lors de la détection d'une demande de correction de l'utilisateur concernant le paramètre de commande affiché, le paramètre de commande affiché est corrigé conformément à la demande de correction, **en ce que** le paramètre de commande corrigé est affiché, **en ce que** le véhicule ferroviaire (301), uniquement lors de la détection d'un ordre de validation de l'utilisateur selon lequel le paramètre de commande corrigé peut être utilisé pour commander le véhicule ferroviaire (301), est commandé sur la base du paramètre de commande corrigé.

3. Procédé selon la revendication 1, **caractérisé en ce que** l'affichage du paramètre de commande correspondant comprend un affichage du paramètre de commande enregistré dans la première zone de mémoire.

4. Procédé selon l'une des revendications précédentes, **caractérisé en ce que** l'extraction du paramètre de commande comprend l'accomplissement d'une reconnaissance vocale, dans lequel lors d'une non-reconnaissance d'un paramètre de commande, une information est délivrée à l'utilisateur selon laquelle aucun paramètre de commande n'a pu être reconnu.

5. Procédé selon l'une des revendications précédentes, **caractérisé en ce que** le paramètre de commande comprend un mot-clé et une valeur affectée au mot-clé, **en ce qu'**il est vérifié si le mot-clé correspond à un mot-clé prédéterminé, **en ce que** lorsque le mot-clé ne correspond pas au mot-clé prédéterminé, une information est délivrée à l'utilisateur selon laquelle le mot-clé prédéterminé manque dans le message vocal enregistré.

6. Procédé selon l'une des revendications précédentes, **caractérisé en ce que** l'enregistrement du message vocal est amorcé uniquement en réponse à la détection d'un ordre de démarrage de l'enregistrement de l'utilisateur et / ou **en ce que** l'enregistrement du message vocal est terminé uniquement en réponse à la détection d'un ordre d'arrêt de l'enregistrement de l'utilisateur.

7. Dispositif (201) de commande d'un véhicule ferroviaire (301), comprenant : un dispositif d'enregistrement acoustique (203) pour enregistrer un message vocal d'un utilisateur du véhicule ferroviaire (301) comprenant un paramètre de commande pour commander le véhicule ferroviaire (301), un processeur (205) pour extraire le paramètre de commande du message vocal enregistré, un dispositif d'affichage (207) pour afficher le paramètre de commande extrait et un dispositif de détection (209) pour détecter un ordre de validation de l'utilisateur selon lequel le paramètre de commande extrait peut être utilisé pour commander le véhicule ferroviaire (301) et un dispositif de commande (211) pour commander le véhicule ferroviaire (301) sur la base du paramètre de commande extrait uniquement lors de la détection de l'ordre de validation de l'utilisateur selon lequel le paramètre de commande extrait peut être utilisé pour commander le véhicule ferroviaire (301),
**caractérisé en ce qu'**une première zone de mémoire et une deuxième zone de mémoire sont prévues, **en ce que** la première zone de mémoire et la deuxième zone de mémoire sont séparées l'une de l'autre logiquement et / ou physiquement, dans lequel le processeur est conçu pour enregistrer, avant la commande du véhicule ferroviaire (301), le paramètre de commande correspondant dans la première zone de mémoire, dans lequel le processeur est conçu pour copier, de la première zone de mémoire à la deuxième zone de mémoire, le paramètre de commande correspondant enregistré dans la première zone de mémoire après la détection de l'ordre de validation correspondant, et le dispositif de commande est conçu pour commander le véhicule ferroviaire (301) sur la base du paramètre de commande correspondant copié dans la deuxième zone de mémoire.

8. Véhicule ferroviaire (301) comprenant le dispositif (201) selon la revendication 7.

9. Programme informatique comprenant un code informatique pour exécuter le procédé selon l'une des revendications 1 à 6, lorsque le programme informatique sur le dispositif est exécuté selon la revendication 7.
